# EUROPEAN PATENT SPECIFICATION

(11) **EP 4 075 581 B1**
(45) Date of publication and mention of the grant of the patent: **30.04.2025**
(21) Application number: 21795900.6
(22) Date of filing: 09.03.2021
(51) Int. Cl.: H01M 50/20, H01M 50/502, H01M 50/211, H01M 50/505

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 29.04.2020 KR 20200052255
(43) Date of publication of application: 19.10.2022
(73) Proprietor: LG Energy Solution, Ltd., Seoul 07335 (KR)
(72) Inventor: LEE, Changhun, Daejeon 34122 (KR); SEONG, Junyeob, Daejeon 34122 (KR); PARK, Myungki, Daejeon 34122 (KR); LEE, Youngho, Daejeon 34122 (KR); PARK, Junkyu, Daejeon 34122 (KR); KIM, Soo Youl, Daejeon 34122 (KR)
(74) Representative: Plasseraud IP
(86) International application number: PCT/KR2021/002921
(87) International publication number: WO 2021/221298

(56) References cited:
- CN-A- 110 140 232
- JP-A- 2009 230 954
- JP-A- 2014 086 280
- KR-A- 20190 054 709
- KR-A- 20190 066 731
- KR-A- 20190 078 521
- KR-A- 20200 008 624
- US-A1- 2014 045 026
- US-A1- 2019 131 596

## Description

### BACKGROUND OF THE INVENTION

### (a) Field of the Invention

### [Technical Field]

### CROSS-REFERENCE TO RELATED APPLICATION

This application claims priority to and the benefit of Korean Patent Application No. 10-2020-0052255 filed in the Korean Intellectual Property Office on April 29, 2020.The present invention relates to a battery module and a battery pack including the same, and more specifically, to a battery module with improved assembly ability and a battery pack including the same.

### [Background Art]

Secondary batteries having high application characteristics and electrical characteristics such as high energy density according to their products are widely applied to battery vehicles, hybrid vehicles, and electric power storage devices driven by electric driving sources as well as portable devices. These secondary batteries are attracting attention as new energy sources for improving environmental-friendliness and energy efficiency in that they do not generate any by-products of energy use as well as their primary merit, in which they can drastically reduce the use of fossil fuels.

In small mobile devices, one, or two, or three battery cells are used per device, while medium and large devices such as automobiles require high power/large capacity. Therefore, a medium battery module and a large battery module in which a plurality of battery cells are electrically connected is used.

Since it is preferable for medium and large battery modules to be manufactured with as small a size and weight as possible, a prismatic battery and a pouch-type battery, which may have a high integration degree and have a small weight with respect to capacity, are mainly used as a battery cell of the medium and large battery modules. Meanwhile, in order to protect the cell stack from external impact, heat, or vibration, the battery module may include a frame member that receives the battery cell stack in an internal space with front and rear openings.

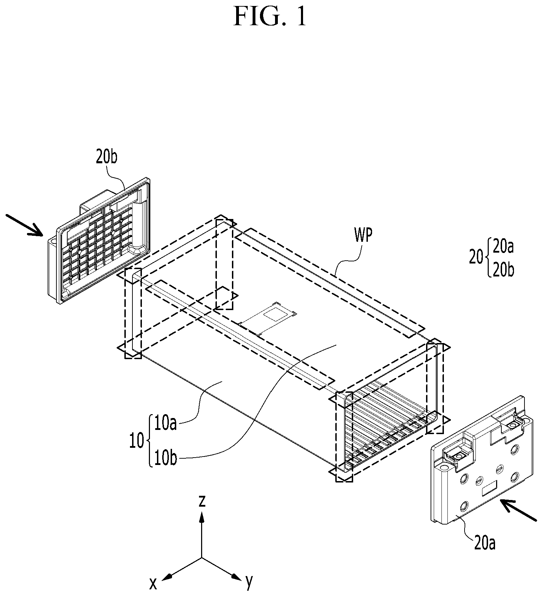

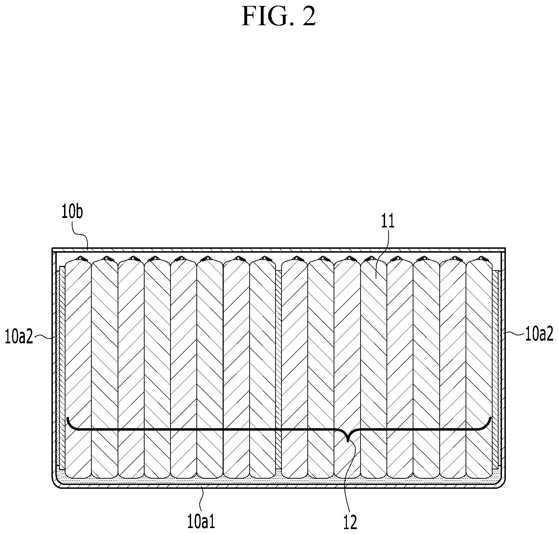

FIG. 1 is a perspective view showing a battery module according to a conventional module frame. FIG. 2 is a view showing a cross-section taken along an xz plane FIG. 1.

Referring to FIG. 1 and FIG. 2, a battery module may include a module frame 10 of which a front surface and a rear surface are opened to cover a battery cell stack 12 formed by stacking a plurality of battery cells 11 and an end plate 20 covering the front surface and the rear surface of the module frame 10. The module frame 10 may include a U-shaped frame 10a and an upper plate 10b covering the opened portion of the U-shaped frame 10a. The U-shaped frame 10a may include a bottom part 10a1 covering the lower surface of the battery cell stack 12 and two side parts 10a2 having a structure protruded upward from both sides of the bottom part 10a1. The end plate 20 may include a front plate 20a covering one side of the module frame 10 and a rear plate 20b covering the other side of the module frame 10.

To form such a battery module, in the state that the battery cell stack 12 is mounted inside the module frame 10, welding may be performed to join the U-shaped frame 10a and the upper plate 10b of the module frame 10. At this time, an assembly failure may occur during the assembling process in which the upper plate 10b is placed on the U-shaped frame 10a. Particularly, when a welding part WP is formed between the upper plate 10b and the side part of the U-shaped frame 10a, a guide for assembly alignment is not provided, which may cause defects.

Document KR 2019/0078521 discloses a battery module of known type.

Document US 2019/131596 discloses a battery module having a U-shaped frame member and a top cover plate assembled.

Document KR 2019/0074509 discloses a battery module comprising one pair of side plates pressed in or fitted to both ends of a top and a bottom plate.

Document CN 110140232 discloses an electrical storage device provided with an exterior member body and a lid member fixed to the exterior member body by means of fixing portions.

Therefore, there is a need for a technology that can solve this problem of conventional art.

### [Disclosure]

### [Technical Problem]

The problem to be solved by the present invention is to provide a battery module with improved assembly ability and a battery pack including the same.

### [Technical Solution]

A battery module according to an embodiment of the present invention is defined in the attached claims.

A battery pack according to another embodiment of the present invention is also provided.

### [Advantageous Effects]

According to embodiments, by forming a protrude-type assemble guide structure in the module frame, it is possible to prevent a misalignment from occurring when assembling the module frame. Through this assembly improvement, it is possible to prevent welding defects from occurring during a module frame welding.

### [Description of the Drawings]

FIG. 1 is a perspective view of a battery module having a conventional module frame.
FIG. 2 is a cross-sectional view taken along an xz plane of FIG. 1.
FIG. 3 is an exploded perspective view showing a battery module according to an embodiment of the present invention.
FIG. 4 is a perspective view showing a lower frame included in a battery module of FIG. 3.
FIG. 5 is a partial perspective view showing an assembly part of an upper plate and a lower frame in a battery module according to an embodiment of the present invention.

### [Mode for Invention]

The present invention will be described more fully hereinafter with reference to the accompanying drawings, in which embodiments of the invention are shown.

Descriptions of parts not related to the present invention are omitted, and like reference numerals designate like elements throughout the specification.

Further, since sizes and thicknesses of constituent members shown in the accompanying drawings are arbitrarily given for better understanding and ease of description, the present invention is not limited to the illustrated sizes and thicknesses. In the drawings, the thickness of layers, films, panels, regions, etc., are exaggerated for clarity. In the drawings, for better understanding and ease of description, the thicknesses of some layers and areas are exaggerated.

It will be understood that when an element such as a layer, film, region, or substrate is referred to as being "on" another element, it can be directly on the other element or intervening elements may also be present. In contrast, when an element is referred to as being "directly on" another element, there are no intervening elements present. In addition, the word "~ on" means positioning on or below the object portion, but does not essentially mean positioning on the upper side of the object portion based on a gravity opposite direction.

In addition, unless explicitly described to the contrary, the word "comprise", and variations such as "comprises" or "comprising", will be understood to imply the inclusion of stated elements but not the exclusion of any other elements.

Further, in the specification, the phrase "in a plan view" means when an object portion is viewed from above, and the phrase "in a cross-section" means when a cross-section taken by vertically cutting an object portion is viewed from the side.

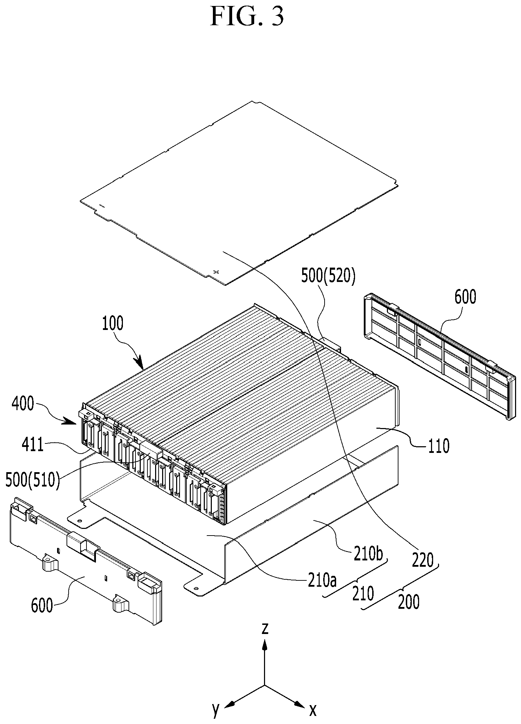

FIG. 3 is an exploded perspective view showing a battery module according to an embodiment of the present invention.

Referring to FIG. 3, a battery module according to an embodiment of the present invention includes a battery cell stack 100 in which a plurality of battery cells 110 are stacked, a module frame 200 receiving the battery cell stack 100, a busbar frame 400 formed on the front/rear surfaces of the battery cell stack 100, and an end plate 600 covering the outside of the busbar frame 400 based on the d battery cell stack 100.

The battery cell 110 according to the present embodiment is a secondary battery and may be configured as a pouch-type secondary battery. The battery cells 110 is configured in plurality, and a plurality of battery cells 110 is stacked to each other to be electrically connected to each other to form a battery cell stack 100. A plurality of battery cells 110 may include an electrode assembly, a cell case, and an electrode lead protruded from the electrode assembly, respectively.

The busbar frame 400 may be equipped with a busbar 411 and a connector 500. The connector 500 may sense a voltage and temperature from the busbars mounted on the busbar frame 400 or a thermistor and transmit it to a BMS (Battery Management System). Among the busbar frames 400 formed on the front/rear surfaces of the battery cell stack 100, a first connector 510 may be formed on the busbar frame 400 positioned in front of the battery cell stack 100, and a second connector 520 may be formed on the busbar frame 400 positioned at the rear surface of the battery cell stack 100.

Conventionally, a connector was formed on only one busbar frame part of two busbar frames formed on the front/rear surfaces of the battery cell stack 100, and the busbar frame part on which a connector is not formed transmitted the voltage and temperature sensing information to the connector located on the opposite side of the reference of the battery cell stack through a flexible flat cable. At this time, the process of assembling the flexible flat cable and the process of checking whether there is any problem in the connection through the flexible flat cable were separately required by positioning the flexible flat cable on the upper side of the battery cell stack.

According to an embodiment of the present invention, the first and second connectors 510 and 520 are separately formed on one side of each busbar frame 400 formed on the front/rear surfaces of the battery cell stack 100, so that the sensed voltage and temperature may be transmitted to the BMS in both directions through the connectors formed on each busbar frame 400 without any need of the separate assemble of the flexible flat cable. Through this, a manufacturing cost of the battery module may be reduced and the battery module structure may be simplified. In addition, the assemble process of the flexible flat cable and the process of checking the connection defects are eliminated, thereby simplifying the battery module manufacturing process.

The battery cell stack 100 is disposed in the module frame 200. According to the present embodiment, the module frame 200 includes a lower frame 210 covering the lower surface and both sides of the battery cell stack 100, and an upper plate 220 covering the upper surface of the battery cell stack 100.

In the state that the busbar frame 400 is mounted on the front/rear surfaces of the battery cell stack 100, the battery cell stack 100 is disposed to the lower frame 210. Thereafter, the upper plate 220 is be assembled to cover the upper part of the battery cell stack 100. At this time, by fixing the upper plate 220 and the lower frame 210, the battery cell stack 100 may be stably disposed within the module frame 200.

The lower frame 210 of the module frame 200 that accommodates the battery cell stack 100 may be a U-shaped frame. The U-shaped frame 210 includes a bottom part 210a and two side parts 210b extending upward in the z-direction from both ends of the bottom part 210a. The bottom part 210a covers the lower surface (a direction opposite the z-axis) of the battery cell stack 100, and the side parts 210b cover both sides (a direction of the x-axis and a direction opposite to the x-axis direction) of the battery cell stack 100.

The upper plate 220 may be formed as a single plate-shaped structure surrounding the upper surface (the z-axis direction) except for the lower surface and the both sides covered by the U-shaped frame 210. The upper plate 220 and the U-shaped frame 210 forms a structure that covers the battery cell stack 100 up, down, left, and right by being joined by welding or the like while the corresponding corners are in contact with each other. The battery cell stack 100 is physically protected through the upper plate 220 and the U-shaped frame 210. To this end, the upper plate 220 and the U-shaped frame 210 may include a metal material having predetermined strength.

As previously described with reference to FIG. 1 and FIG. 2 in the state that the battery cell stack 100 is mounted inside the module frame 200, welding may be performed to join the U-shaped frame 210 and the upper plate 220 of the module frame 200. At this time, in order to form the welding part, it is necessary to fix the U-shaped frame 210 and the upper plate 220 so that the joint surfaces of the side part 210b of the U-shaped frame 210 and the upper plate 220 are positioned corresponding to each other. However, there is a limit to fixing the U-shaped frame 210 and the upper plate 220 to closely correspond to each other, and this has a problem in that the welding is not performed smoothly.

In addition, laser welding may be performed for the welding, and damage to internal parts including the battery cells may be caused by the laser itself or welding spatters penetrated during the welding process. At this time, if the assembly defect occurs during the assemble process, in which the upper plate 220 is placed on the U-shaped frame 210, the weld line is also misaligned, and in this case, a larger amount of welding spatter is inflowed into the battery module where the battery cells are located, thereby causing problems.

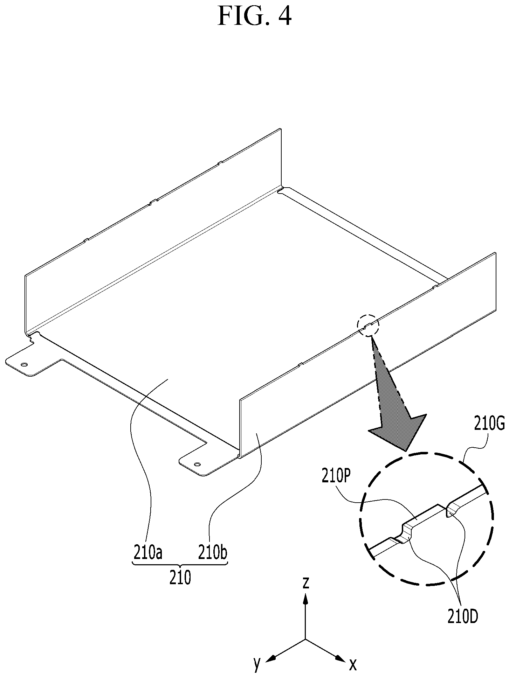

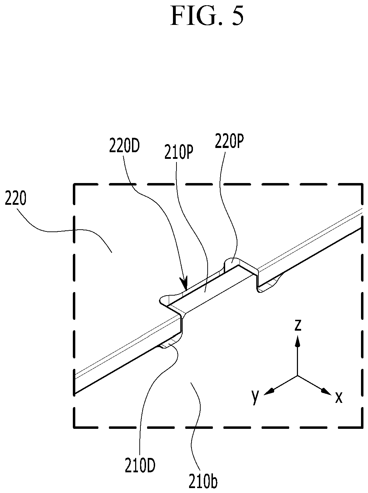

In order to reduce this problem, the battery module according to the present embodiment includes a lower frame having an assemble guide structure of a protruding type, thereby improving the assembly ability of the lower frame and upper plate, thereby preventing the welding defects. This will be described in detail with reference to FIG. 4 and FIG. 5.

FIG. 4 is a perspective view showing a lower frame included in a battery module of FIG. 3. FIG. 5 is a partial perspective view showing an assembly part of an upper plate and a lower frame in a battery module according to an embodiment of the present invention.

Referring to FIG. 4, the upper corner of the side part 210b of the U-shaped frame 210 according to the present embodiment forms an assemble guide part 210G. The assemble guide part 210G is formed as at least one on the upper corner of the side part 210b of the U-shaped frame 210. A plurality of assemble guide parts 210G may be formed to be spaced apart from each other while having a predetermined interval therebetween.

The assemble guide part 210G according to the present embodiment includes a supporting part 210P of a protrusion shape protruded in the z-axis direction and a depressed part 210D formed on both sides of the supporting part 210P. The depressed part 210D may have an escape shape in which the upper corner of the side part 210b of the U-shaped frame 210 is concave in the opposite direction of the z-axis.

Referring to FIG. 5, a groove part 220D corresponding to the assemble guide part 210G formed on the U-shaped frame 210 is formed on the upper plate 220 according to the present embodiment. The groove part 220D may have a structure in which both corners of the upper plate 220 are depressed in a direction facing each other so that the assemble guide part 210G of the U-shaped frame 210 may be assembled with the upper plate 220. In this case, an escape part 220P may be formed on both ends of the groove part 220D. The escape part 220P minimizes a gap of the groove part 220D so that the supporting part 210P of the assemble guide part 210G may be accurately coupled to the groove part 220D.

According to the present embodiment, by fixing the positions in the x-axis direction and the y-axis direction, not only the assembly ability may be improved, but also the durability of the battery module may be improved.

As shown in FIG. 3, like the battery cell stack 100 according to an embodiment of the present invention, in the case of a large area module in which the number of the stacked battery cells 110 is larger than the number of battery cells 11 in the battery cell stack 12 shown in FIG. 12, the horizontal direction length of the battery module becomes longer. In the large area module, since the horizontal direction length of the battery module is increased, the load at the center is large and the possibility of a bending deformation increases. Here, the horizontal direction length may mean a length in the direction in which the battery cells are stacked. Due to the bending deformation, the coupling structure of the U-shaped frame 210 and the upper plate 220 may be distorted depending on the battery module usage condition, but according to the present embodiment, through the strong position fixation in both the x-axis direction and the y-axis direction, the coupling retention between the U-shaped frame 210 and the upper plate 220 may be improved.

Again, referring to FIG. 3, the battery module according to the present embodiment further includes an end plate 600 covering the front/rear surfaces of the battery cell stack 100. Through the module frame 200 described above, it is possible to physically protect the battery cell stack 100 disposed inside. The end plate 600 is positioned on the front (the opposite direction of the y-axis) and rear (the y-axis direction) of the battery cell stack 100. This end plate 600 is formed to cover the battery cell stack 100, and it is possible to physically protect the battery cell stack 100 and other electronic devices from external impact.

Meanwhile, although not specifically shown, a busbar frame 400 to which the busbar 411 is mounted and an insulating cover for an electrical insulation, etc. are positioned between the battery cell stack 100 and the end plate 600.

On the other hand, one or more battery modules according to an embodiment of the present invention may be packaged in a pack case to form a battery pack. The battery pack may be formed by mounting at least one battery module together with various control and protection systems such as a battery management system (BMS) and a cooling system.

The battery module described above and the battery pack including the same may be applied to various devices. The device may be applied to a vehicle such as an electric bicycle, an electric vehicle, and a hybrid vehicle, but is not limited thereto, and may be applied to various devices that may use the secondary battery.

### [Description of Reference Numerals]

200: module frame
210: lower frame
210G: assemble guide part
210P: supporting part
210D: depressed part
220: upper plate
220D: groove part
220P: escape part

## Claims

1. A battery module comprising:
a battery cell stack (100) in which a plurality of battery cells (110) are stacked;
a module frame (200) surrounding the battery cell stack (100);
a busbar frame (400) covering the front/rear surfaces of the battery cell stack (100) exposed from the module frame (200); and
an end plate (600) covering the busbar frame (400),
wherein the module frame (200) includes a lower frame (210) including a bottom part (210a) and two side parts (210b) extending upward in the z-direction from both ends of the bottom part (210a) and covering a lower part and both sides of the battery cell stack (100), and an upper plate (220) covering an upper part of the battery cell stack (100), and
at least one assemble guide part (210G) formed as at least one on the upper corner of the side part (210b) of the lower frame (210),
wherein the assemble guide part (210G) includes a supporting part (210P) of a protrusion shape protruded in the z-axis direction and a depressed part (210D) formed on both sides of the supporting part (210P); and
wherein the upper plate (220) comprises a groove part (220D) to which the supporting part (210P) of the assemble guide part (210G) is assembled.

2. The battery module of claim 1, wherein
the depressed part (210D) has an escape shape in which the upper corner of the side part (210b) of the lower frame (210) is concave in the opposite direction of the z-axis.

3. The battery module of claim 1, wherein
the groove part (220D) has a structure in which both corresponding corners of the upper plate (220) are recessed in a direction facing each other.

4. The battery module of claim 3, wherein
an escape part (220P) is formed on both ends of the groove part (220D) and it has a shape in which a corner of the upper plate (220) is concave in the opposite direction of the x-axis.

5. A battery pack comprising the battery module of claim 1.

## Patentansprüche

1. Batteriemodul, umfassend:
einen Batteriezellenstapel (100), in welchem eine Mehrzahl von Batteriezellen (110) gestapelt sind;
einen Modulrahmen (200), welcher den Batteriezellenstapel (100) umgibt;
einen Stromschienenrahmen (400), welcher die vorderen/hinteren Flächen des Batteriezellenstapels (100) bedeckt, welche von dem Modulrahmen (200) freigelegt sind; und
eine Endplatte (600), welche den Stromschienenrahmen (400) bedeckt,
wobei der Modulrahmen (200) einen unteren Rahmen (210) umfasst, welcher einen unteren Teil (210a) und zwei Seitenteile (210b) umfasst, welche sich von beiden Enden des unteren Teils (210a) aufwärts in die z-Richtung erstrecken und einen unteren Teil und beide Seiten des Batteriezellenstapels (100) bedecken, sowie eine obere Platte (220), welche einen oberen Teil des Batteriezellenstapels (100) bedeckt, und
wenigstens einen Assemblierungsführungsteil (210G), welcher als wenigstens eines an der oberen Ecke des Seitenteils (210b) des unteren Rahmens (210) gebildet ist,
wobei der Assemblierungsführungsteil (210G) einen Stützteil (210P) von einer Vorsprungsform umfasst, welche in die z-Achsenrichtung hervorsteht, und einen abgesenkten Teil (2100), welcher an beiden Seiten des Stützteils (210P) gebildet ist; und
wobei die obere Platte (220) einen Nutteil (220D) umfasst, an welchem der Stützteil (210P) des Assemblierungsführungsteils (210G) assembliert ist.

2. Batteriemodul nach Anspruch 1, wobei
der abgesenkte Teil (210D) eine Ausweichform aufweist, in welcher die obere Ecke des Seitenteils (210b) des unteren Rahmens (210) konkav in die entgegengesetzte Richtung der z-Achse ist.

3. Batteriemodul nach Anspruch 1, wobei
der Nutteil (220D) eine Struktur aufweist, in welcher beide entsprechenden Ecken der oberen Platte (220) in einer zueinander zugewandten Richtung versenkt sind.

4. Batteriemodul nach Anspruch 3, wobei
ein Ausweichteil (220P) an beiden Enden des Nutteils (220D) gebildet ist und eine Form aufweist, in welcher eine Ecke der oberen Platte (220) konkav in die entgegengesetzte Richtung der x-Achse ist.

5. Batteriepack umfassend das Batteriemodul nach Anspruch 1.

## Revendications

1. Module de batterie comprenant :
un empilement de cellules de batterie (100) dans lequel une pluralité de cellules de batterie (110) sont empilées ;
un châssis de module (200) entourant l'empilement de cellules de batterie (100) ;
un châssis de barres omnibus (400) recouvrant les surfaces avant/arrière de l'empilement de cellules de batterie (100) exposées à partir du châssis de module (200) ; et
une plaque d'extrémité (600) recouvrant le châssis de barres omnibus (400),
dans lequel le châssis de module (200) comporte un châssis inférieur (210) comportant une partie inférieure (210a) et deux parties latérales (210b) s'étendant vers le haut dans la direction z à partir des deux extrémités de la partie inférieure (210a) et recouvrant une partie inférieure et les deux côtés de l'empilement de cellules de batterie (100), et une plaque supérieure (220) recouvrant une partie supérieure de l'empilement de cellules de batterie (100), et
au moins une partie de guidage d'assemblage (210G) formée en tant qu'au moins un élément sur le coin supérieur de la partie latérale (210b) du châssis inférieur (210),
dans lequel la partie de guidage d'assemblage (210G) comporte une partie de support (210P) d'une forme saillante faisant saillie dans la direction d'axe z et une partie enfoncée (210D) formée des deux côtés de la partie de support (210P) ; et
dans lequel la plaque supérieure (220) comprend une partie rainure (220D) sur laquelle est assemblée la partie de support (210P) de la partie de guidage d'assemblage (210G).

2. Module de batterie selon la revendication 1, dans lequel
la partie enfoncée (210D) présente une forme fuyante dans laquelle le coin supérieur de la partie latérale (210b) du châssis inférieur (210) est concave dans la direction opposée de l'axe z.

3. Module de batterie selon la revendication 1, dans lequel
la partie rainure (220D) présente une structure dans laquelle les deux coins correspondants de la plaque supérieure (220) sont enfoncés dans une direction où ils se font face l'un l'autre.

4. Module de batterie selon la revendication 3, dans lequel une partie fuyante (220P) est formée aux deux extrémités de la partie rainure (220D) et présente une forme dans laquelle un coin de la plaque supérieure (220) est concave dans la direction opposée de l'axe x.

5. Bloc-batterie comprenant le module de batterie selon la revendication 1.
